(19) Europäisches Patentamt / European Patent Office / Office européen des brevets

(11) **EP 2 707 184 B1**

(12) **EUROPEAN PATENT SPECIFICATION**

(45) Date of publication and mention
of the grant of the patent:
**31.10.2018 Bulletin 2018/44**

(51) Int Cl.:
*B27K 5/06* (2006.01)      *B27K 3/36* (2006.01)
*B27K 3/15* (2006.01)      *C08L 83/02* (2006.01)

(21) Application number: **12782427.4**

(22) Date of filing: **10.05.2012**

(86) International application number:
**PCT/IB2012/000915**

(87) International publication number:
**WO 2012/153183 (15.11.2012 Gazette 2012/46)**

(54) **A PROCESS FOR THE TREATMENT OF WOOD COMPRISING IMPREGNATING WITH CITRIC ACID FOLLOWED BY CURING AT HIGH TEMPERATURE.**

VERFAHREN ZUR BEHANDLUNG VON HOLZ EINSCHLIESSLICH IMPRÄGNIERUNG MIT ZITRONENSÄURE MIT ANSCHLIESSENDER AUSHÄRTUNG BEI HOHER TEMPERATUR

PROCÉDÉ POUR LE TRAITEMENT DU BOIS PAR IMPRÉGNATION À L'ACIDE CITRIQUE PUIS PAR CHAUFFAGE À HAUTE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2011 SE 1150416**
              **10.05.2011 SE 1150417**

(43) Date of publication of application:
**19.03.2014 Bulletin 2014/12**

(73) Proprietor: **Stora Enso Oyj**
**00101 Helsinki (FI)**

(72) Inventors:
• **MAYES, Duncan**
  **00101 Helsinki (FI)**

• **PYNNONEN, Janne**
  **02760 Espoo (FI)**

(74) Representative: **Steinrud, Henrik et al**
**Stora Enso AB**
**Group Intellectual Property**
**Box 9090**
**65009 Karlstad (SE)**

(56) References cited:
**EP-A1- 0 623 433**      **EP-A1- 2 311 913**
**WO-A1-2009/008797**    **WO-A1-2011/042609**
**WO-A1-2011/096812**    **WO-A1-2012/072592**
**WO-A2-2004/011216**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 707 184 B1**

**Description**

**Field of the invention**

The present invention relates to a process for treating wood which process comprises the steps of impregnating the wood with a solution comprising citric acid and sodium silicate and thereafter curing the wood at high temperature. The present invention further relates to wood being treated according to the process.

**Background**

Wood that is untreated is very susceptible to influences caused by the external environment. Untreated wood that is exposed to moisture and/or soil for sustainable periods of time will become weakened by attacks by various types of fungi, bacteria or insects. It is therefore of importance to treat the wood in order to increase its resistance against moisture and fungal attack.

There exist a number of different treatment methods which will increase the resistance of wood. Chemical treatments of wood in order to increase the biological durability and strength have been used for a long time. Many different chemicals may be added. These chemicals are normally called fungicides and they will provide long-term resistance to organisms that cause deterioration of the wood. If it is applied correctly, it can extend the productive life of timber by five to ten times. Citric acid is one chemical that is used in order to improve the durability of wood. Furthermore, citric acid may also give fiber strengthening properties.

Another known method in order to improve the resistance of wood is to treat the wood at high temperatures. During heat treatment, certain organic compounds found in the wood will be removed and thereby decreases the possibility for fungi and rot to thrive on the wood. Thus, by heating wood to a certain temperature, it may be possible to make the wood fibers less appetizing to fungi and insects. Heat treatment can also improve the properties of the wood with respect to water, i.e. lower equilibrium moisture, less moisture deformation, and weather resistance.

Heat treatment can also be done in order to improve the dimensional stability of wood. During the heat treatment hemicellulose and other components of the wood will be removed. Hemicellulose works as a binder in wood making the wood stronger. Heat treatment of wood will thus decrease the strength of wood since the hemicellulose in the wood is degraded or removed at higher temperatures.

There is thus a need for a process for producing a more durable and strong wood product.

**Summary of the invention**

It is an object of the present invention to provide a process for the production of strong wood in an improved way.

Another object of the present invention is to provide a process for significantly improving the surface hardness of wood against the impacts abrasion and weathering.

Yet another object of the present invention is to provide a process for production of biologically durable wood.

These objects and other advantages are achieved by the process according to claim 1. The present invention relates to a process for the treatment of wood wherein the process comprises the step of; impregnating solid wood with a solution comprising citric acid and sodium silicate and curing the impregnated wood at a temperature of between 150-220°C. By combining impregnation of wood with a solution comprising citric acid and high temperature curing, it has been shown that wood with increased strength can be produced in a very efficient way.

The solid wood treated in accordance with the process of the invention is preferably used as structural components in buildings, such as load bearing wall components or garden furniture.

The curing may last for a period of at least 2 hours, preferably for about 4 hours. Depending on the end use of the wood and on the dry content of the wood, the time for curing can be varied.

The curing of the impregnated wood may preferably be performed at a temperature of between 180 - 220 °C. It has been shown that the use of a higher temperature in the curing gives rise to a product with an improved dimensional stability and a better resistance to fungal and insects.

It is preferred that the solution comprising citric acid has a concentration of 1-40%. The concentration of the solution comprising citric acid depends on the desired amount of citric acid in the wood. By increasing the concentration of the solution, higher amount of citric acid in the wood is achieved. High amounts of citric acids are often preferred. The wood preferably comprises citric acid of an amount of 10-80 kg/m3.

The impregnation solution further comprises sodium silicate, which gives rise to an increased strength and hardness. In one embodiment, the impregnation solution has been prepared by mixing citric acid and sodium silicate at elevated temperatures, such as at a temperature of e.g. between 30 - 80 °C, preferably between 45 - 80 °C. This has been shown to give rise to a product with an even higher strength and durability.

The ratio between citric acid and the sodium silicate in the solution is between 1:5-1:10 (citric acid:sodium

2

silicate). It is often preferred to have high amounts of citric acids. However, too high amounts may cause the sodium silicate to precipitate in the solution. Moreover, the pH during impregnation is preferably above 4. It is preferred not to decrease the pH of the solution during impregnation to a value below 4. The sodium silicate has a relatively high pH and by adding citric acid to a solution comprising sodium silicate the pH will decrease. However, it is preferred not to decrease the pH too much since a low pH solution will affect the equipment, on or in which the impregnation of the wood occurs, e.g. corrosion of the equipment may occur.

The curing may take place in an oxygen free environment. Since high temperatures are used during curing, it may be advantageous to cure the wood and its impregnated constituents in an oxygen free environment.

The wood may be densified during or after curing. By increasing the density of the wood during or after curing the surface strength of the wood can be even further increased.

The present invention also relates to wood treated according to the process described above. The wood produced will have increased strength and less fiber loosening. It is preferred that the treated wood is softwood.

## Detailed description

The invention relates to a process to treat wood by impregnation of wood, preferably solid wood, with a solution comprising citric acid followed by curing of the wood at high temperatures. By combining impregnation of the wood with a solution comprising citric acid and curing at high temperatures it has been shown that wood with an increased strength, durability and dimensional stability can be produced. Moreover, the treatment of the wood with citric acid followed by curing at high temperatures has also been shown increase the biological durability of the product.

During heat treatment of wood, hemicellulose and other components in the wood are degraded or removed and the strength of the wood is thus reduced. By impregnating the wood with a solution comprising citric acid prior to curing at high temperatures it is possible to replace the function of removed components with citric acid. Citric acid will then work as a binder between the wood's fibers and cells and thus increase the strength and durability of the wood. The hardness and stability of the wood is also improved.

The curing of the wood may be done at a temperature of between 150-220°C, preferably of between 180 - 220 °C. If temperatures in the upper range are used, larger amount of components, e.g. hemicellulose, is removed and replaced by citric acid compared to if temperatures in the lower range are used. The curing may last for at least two hours, preferably for about 4 hours. The parameters chosen for the curing of the wood depends on the wood used and on the end use of the impregnated and cured wood product.

During the curing process the citric acid will react with the heat and the acid will then attach to the wood fiber. The acid will thus be activated and connected to the wood fibers during the curing process. Since the curing is done at high temperatures the wood will thus also be dried.

The impregnation solution comprises a mixture of citric acid and sodium silicate. Sodium silicate will then, just as citric acid, attach to the wood fibers during the curing process whereby the inside of the wood is hardened during the heat treatment. The combination of citric acid and sodium silicate has been shown increase the hardness and the strength of the end product. Moreover, impregnation of wood with a combination of citric acid and sodium silicate followed by curing at high temperatures give rise to an end product with a high resistance against fungal decay.

The curing can be done in an oxygen free environment. This can be an advantage if high temperatures are used since wood easily ignites at high temperatures but the absence of oxygen will eliminate that risk.

The impregnation with citric acid or with a combination of citric acid and sodium silicate is preferably done at high pressure at room temperature. The impregnation can be done in three steps, one first step in which the wood is subjected to vacuum which will remove the air in the wood, a second step in which the solution comprising citric acid or a combination of citric acid and sodium silicate will impregnate the wood and a third step in which the wood is subjected to vacuum in order to pressure the citric acid or the citric acid and the sodium silicate into the wood. The second step is preferably done at high pressure, preferably at a pressure of about 13 bar for at least 7 hours. The first and third steps may last for about 30-60 minutes.

It is preferred that the solution comprising citric acid has a concentration of 1-40% by weight, preferably a concentration of 4-10% by weight. The concentration of the solution comprising citric acid depends on the desired load of citric acid in the wood. By increasing the concentration the higher load of citric acid in the wood is achieved. High amounts of citric acids are often preferred. The impregnated wood preferably comprises citric acid of an amount of 10-80 kg/m3. The amount of citric acid in the wood depends on the end use of the wood product.

The ratio between the citric acid and the sodium silicate is between 1:5 - 1:10 (citric acid:sodium silicate). A high amount of citric acid is often preferred. However, too high amounts of citric acid may cause the sodium silicate to precipitate in the solution. The amount of citric acid respectively sodium silicate in the solution depends on which kind of wood that is being treated and on the end use of the wood product.

The wood may be densified during or after curing of the wood. The densification may be done by applying pressure to the wood. The densification may be done at a pressure of 1-3 kg/cm$^2$ and the maximum compression should be about 10% of the thickness of the wood.

It is preferred to apply both pressure and heat, since this combination will improve the densification of the wood. The densification may be done off-line, on-line or in-line, i.e. in-line with the process according to the invention. If off-line densification is used, it is possible to use a hot press after the curing of the wood. If in-line densification is used it is possible to use roller or plate based systems. The densification can be done during the curing of the wood or after the wood has been cured and thus also dried. It is also possible to pre- cure the wood followed by densification and thereafter cure the wood at least one more time.

By densifiying the wood, the surface of the wood will become more set, i.e. the fibers on the surface have less tendency to react with moisture and retain its original form. This also leads to reduced tendency of fiber loosening on the surface of the wood. The surface density and thus also the hardness of the wood will also be improved.

The present invention also relates to solid wood treated according to the process described above. The wood produced will have an increased strength and less fiber loosening. It is preferred that the treated wood is softwood. However, it is also possible to treat other kind of wood with the process according to the invention, such as hardwood.

The produced wood can be used for the production of many different products, such as cladding, decking, light poles, jetties, joinery, furniture etc.

The invention will be further illustrated by way of some examples.

Example 1

In this example, the dimensional stability of pressure impregnated and heat-treated Scots pine (Pinus sylvestris L.) was studied.

Test pieces of Socts pine were impregnated as follows; 21 test pieces were impregnated with a solution comprising citric acid (at a concentration of 9.3%) and 19 + 18 test pieces were impregnated with a solution comprising sodium silicate (at a concentration of 7 %) and citric acid (ratio 10/1). As references, 10 pieces of ThermoWood were impregnated with citric acid (9.3%). Table 1 shows the impregnation process utilized.

Table 1: the impregnation processes

| Impregnation | Process phase | Time (min) | Pressure (bar) | Temperature (°C) |
|---|---|---|---|---|
| **Citric acid** | Initial vacuum | 45 | -0.93 | 18 |
| | Pressure phase | 480 | 13.3 | 20 |
| | Final vacuum | 45 | -0.87 | 19 |
| **Natrium Silicate + Citric acid** | Initial vacuum | 45 | -0.88 | 18 |
| | Pressure phase | 420 | 12.99 | 22 |
| | Final vacuum | 40 | -0.88 | 21 |
| | Curing | 40 | 8.49 | 21 |
| | | 880 | -0.82 | 20 |

The impregnated test pieces of sawn timber were heat treated at either 180 °C for three hours or at 160 °C for four hours. After the heat treatment, the material was stabilized to the approximate moisture content of 12%.

The dimensional stability was determined according to the standard SFS-EN 1910 (Finnish Standards Association SFS 2000).Firstly, the test pieces were conditioned in the relative humidity of 65 +/- 5% and temperature of 20 +/- 2 °C until achieving the conastant mass. The conditioned test pieces were then exposed to the climate with relative humidity of 85 +/- 5% and temperature of 20 +/- 2 °C, which was followed by stabilization in the dry climate (RH 30 +/- 5%, T 20 +/-2°C.

After each stage of stabilization, the dimensions of the test pieces were measured according to the standard EN 13647 (Finnish Standards Association SFS 2003). The test pieces' width were measured along two lines, their distance to the edges being approximately 5 mm. The length was the average of them easurements made from the edges of the pieces. The thinkess of the pieces was measured from two mearuement points in the both ends of the pieces.

The cumulative relative changes (%) were determined as follows:

$$dcr = 100 \frac{\frac{18}{h}(D_h - D_a)}{D_i}$$

Where dcr = cumulative relative dimensional change (%), $D_h$ = the dimension after stabilization in the numid climate (mm), $D_d$ = the dimension after stabilization in the dry climate (mm), $D_d$ = the dimension after initial conditioning (mm), and $h$ = 18.

Table 2 shows the dimensional changes of the treated test pieces.

Table 2: the cumulative relative dimensional changes (dcr, %) according to the specimen treatments.

| Impregnation (subst, conc) | Heat treatment | *n* | dcr*, length (%) | dcr*, thickness (%) | dcr*, width (%) |
|---|---|---|---|---|---|
| Sodium Silicate 7 % + CA (ratio 10/1) | 180 °C | 19 | 0.07/0.03/0.37 | 1.88/0.31/0.16 | 2.12/0.28/0.13 |
| Sodium Silicate 7% + CA (ratio 10/1) | 160 °C | 18 | 0.07/0.04/0.52 | 2.13/0.43/0.20 | 2.64/0.45/0.17 |
| Citric Acid (CA) 9.3% | 180 °C | 21 | 0.07/0.02/0.03 | 0.74/0.20/0.27 | 0.98/0.29/0.30 |
| Thermowood, CA 9.3% | None | 10 | 0.05/0.02/0.38 | 1.82/0.49/0.27 | 1.52/0.31/0.20 |
| * the dcr values specifies mean/Std. dev/coefficient of variance | | | | | |

As can be seen in table 2, the longitudinal changes of the test pieces were small, 0.05 - 0.07 %. The radial changes were smallest among CA-impregnated and heat treated pieces. A significant difference was noted between CA-impregnated sawn timber and Thermowood; the heat treatment of citric-acid (CA) impregnated material increased the dimensional stability. Also concerning the tangential stability, CA-impregnated ThermoWood showed higher dimensional changes than heat-treated, CA-impregnated test pieces. It can further be noticed that heat treatment at 180 °C of test pieces impregnated with citric acid and sodium silicate showed higher dimensional stability than heat treatment at 160 °C.

Example 2

In this example, the efficacy of impregnated and heat treated scots pine sapwood against termites was studied.

Test pieces of pine sapwood were impregnated and thereafter heat treated in accordance with table 3.

Table 3: impregnation and heat treatment of test pieces

| | Sample 1a-1c | Sample 2a-2c | Reference Ra-c |
|---|---|---|---|
| Impregnation (active ingredient and concentration) | Citric acid 7.5 % | Sodium silicate 5.5% + Citric acid < 1 % | None |
| Heat treatment (temp./time) | 170°C/4h | 170°C/4h | None |

The efficacy against termites was tested according to NF EN 117. The details and dates of the tests are shown in table 4.

Table 4

| Termite species employed | Reticulitermes flavipes (formerly Reticulitermes santonensis |
|---|---|
| Place of origin of the termites | Saint-Trojan-Les Bains (Charente-Maritime) |
| Type of wood used for control | Scots pine sapwood |
| Test for ageing | None |
| Start date (exposure) | 17/11/2011 |
| Inspection date | 05/01/2012 |
| Test validation | Yes, conforms to standard |

Scale of Termite attacks on wood

According to the EN 117 Standard;

0 = no attack;
1 = attempted attack;
2 = slight attack:
3 = average attack;
4 = strong attack.

The result of the test is shown in table 5.

Table 5

| Sample reference | Worker survival | Soldiers (S) and Nymphs (N) | Rating |
|---|---|---|---|
| Sample 1a | 0 | - | 3 |
| Sample 1b | 0 | - | 2 |
| Sample 1c | 5 | N | 2 |
| Sample 2a | 23 | N-S | 3 |
| Sample 2b | 8 | N | 3 |
| Sample 2c | 0 | - | 3 |
| Reference Ra | 52 | N-S | 4 |
| Reference Rb | 57 | N-S | 4 |
| Reference Rc | 54 | N-S | 4 |

## Claims

1. Process for the treatment of solid wood wherein the process comprises the steps of:

   - impregnating wood with a solution comprising citric acid and sodium silicate,
   - curing the impregnated wood at a temperature of between 150-220°C,
   - wherein the ratio between citric acid and sodium silicate in the solution is between 1:5-1:10 (citric acid:sodium silicate).

2. Process according to claim 1, wherein the curing of the impregnated wood is performed at a temperature of between 180 - 220 °C.

3. Process according to any of the preceding claims wherein the solution comprising citric acid has a concentration of 1-40%.

4. Process according to any of the preceding claims wherein the impregnated wood comprises citric acid of an amount of 10-80 kg/m3.

5. Process according to claim 1, wherein the impregnation solution has been prepared by mixing citric acid and sodium silicate at elevated temperatures.

6. Process according to any of claims 1 - 5, wherein the curing lasts for a period of at least 2 hours, preferably for about 4 hours.

7. Process according to any of the preceding claims wherein the curing takes place in an oxygen free environment.

8. Process according to any of the preceding claims wherein the wood is densified during or after curing.

**9.** Wood treated according to the process of any of the claims 1-8.

**10.** Wood according to claim 9 wherein the wood is softwood.

**Patentansprüche**

**1.** Verfahren für die Behandlung von Massivholz, worin das Verfahren die folgenden Schritte umfasst:

- Imprägnieren von Holz mit einer aus Zitronensäure und Natriumsilikat bestehenden Lösung,
- Härten des imprägnierten Holzes bei einer Temperatur zwischen 150 - 220 °C,
- worin das Verhältnis zwischen der Zitronensäure und dem Natriumsilikat in der Lösung zwischen 1:5-1:10 (Zitronensäure:Natriumsilikat) liegt.

**2.** Verfahren nach Anspruch 1, wobei das Härten des imprägnierten Holzes bei einer Temperatur zwischen 180 - 220 °C ausgeführt wird.

**3.** Verfahren nach einem der vorhergehenden Ansprüche, wobei die Lösung Zitronensäure mit einer Konzentration von 1-40 % umfasst.

**4.** Verfahren nach einem der vorhergehenden Ansprüche, worin das imprägnierte Holz Zitronensäure in einer Menge von 10-80 kg/m3 umfasst.

**5.** Verfahren nach Anspruch 1, worin die Imprägnierungslösung durch Mischen der Zitronensäure und des Natriumsilikats bei erhöhten Temperaturen vorbereitet wird.

**6.** Verfahren nach einem der Ansprüche 1 - 5, worin das Härten mindestens 2 Stunden, vorzugsweise ungefähr 4 Stunden, dauert.

**7.** Verfahren nach einem der vorhergehenden Ansprüche, worin das Härten in einer sauerstofffreien Umgebung abläuft.

**8.** Verfahren nach einem der vorhergehenden Ansprüche, worin das Holz während oder nach dem Härten verdichtet wird.

**9.** Holz, behandelt gemäß einem Verfahren nach einem der Ansprüche 1-8.

**10.** Holz nach Anspruch 9, worin das Holz ein Weichholz ist.

**Revendications**

**1.** Procédé de traitement de bois solide dans lequel le procédé comprend les étapes consistant à :

- l'imprégnation du bois avec une solution comprenant de l'acide citrique et du silicate de sodium,
- le durcissement du bois imprégné à une température variant entre 150 et 220 °C,
- où le rapport entre l'acide citrique et le silicate de sodium contenus dans la solution varie entre 1:5-1:10 (acide citrique:silicate de sodium).

**2.** Procédé selon la revendication 1, dans lequel le durcissement du bois imprégné est réalisé à une température variant de 180 à 220°C.

**3.** Procédé selon l'une quelconque des revendications précédentes dans lequel la solution comprenant de l'acide citrique a une concentration comprise entre 1 et 40%.

**4.** Procédé selon l'une quelconque des revendications précédentes dans lequel le bois imprégné comprend de l'acide citrique en une quantité comprise entre 10 et 80 kg/m3.

**5.** Procédé selon la revendication 1, dans lequel la solution imprégnée a été préparée en mélangeant l'acide citrique et le silicate de sodium à des températures élevées.

6. Procédé selon l'une quelconque des revendications 1 à 5, dans lequel le durcissement dure au moins 2 heures, de préférence environ 4 heures.

7. Procédé selon l'une quelconque des revendications précédentes dans lequel le durcissement se fait dans un environnement exempt d'oxygène.

8. Procédé selon l'une quelconque des revendications précédentes dans lequel le bois est densifié pendant ou après le durcissement.

9. Bois traité selon le procédé de l'une quelconque des revendications 1 à 8.

10. Bois selon la revendication 9 dans lequel le bois est un bois mou.